# EUROPÄISCHE PATENTSCHRIFT

(11) **EP 1 157 200 B1**
(45) Veröffentlichungstag und Bekanntmachung des Hinweises auf die Patenterteilung: **18.09.2002**
(21) Anmeldenummer: 00910611.3
(22) Anmeldetag: 26.01.2000
(51) Int. Cl.: F02B 23/10, F02F 1/42, F02B 31/06

(54) **LUFTANSAUGSYSTEM FÜR EINE BRENNKRAFTMASCHINE**
AIR INTAKE SYSTEM FOR INTERNAL COMBUSTION ENGINE
SYSTEME D'ADMISSION D'AIR POUR MOTEUR THERMIQUE

(30) Priorität: 20.02.1999 DE 19907398
(43) Veröffentlichungstag der Anmeldung: 28.11.2001
(73) Patentinhaber: Volkswagen Aktiengesellschaft, 38436 Wolfsburg (DE)
(72) Erfinder: LIPPERT, Eduard, D-38547 Calberlah (DE)
(86) Internationale Anmeldenummer: EP0000571
(87) Internationale Veröffentlichungsnummer: WO00049279

(56) Entgegenhaltungen:
- EP-A- 0 579 860
- DE-C- 19 754 736
- US-A- 5 551 392
- PATENT ABSTRACTS OF JAPAN vol. 007, no. 230 (M-249), 12. Oktober 1983 (1983-10-12) & JP 58 124019 A (TOYOTA JIDOSHA KOGYO KK), 23. Juli 1983 (1983-07-23)
- PATENT ABSTRACTS OF JAPAN vol. 014, no. 357 (M-1005), 2. August 1990 (1990-08-02) & JP 02 125911 A (TOYOTA MOTOR CORP), 14. Mai 1990 (1990-05-14)

## Beschreibung

Die Erfindung betrifft ein Luftansaugsystem für eine Brennkraftmaschine, insbesondere für einen Otto-Motor mit Direkteinspritzung, mit einem wenigstens einen Zylinder begrenzenden Zylinderkopf, einem Saugrohr, welches wenigstens einen Luftkanal pro Zylinder aufweist, und pro Zylinder wenigstens einem in dem Zylinderkopf angeordneten Einlaßkanal mit in einen zugeordneten Zylinder mündender Einlaßöffnung, wobei das Saugrohr und der Zylinderkopf über einen Zylinderkopfflansch derart miteinander verbunden sind, daß jeweils ein Luftkanal des Saugrohres mit einem entsprechenden Einlaßkanal im Zylinderkopf in fluidleitender Verbindung steht, wobei im Luftkanal des Saugrohres eine wahlweise den Querschnitt des Luftkanals verengende Schaltklappe angeordnet ist, gemäß dem Oberbegriff des Anspruchs 1.

Aus der DE 38 36 550 C2 ist ein Einlaßkanalsystem für eine Brennkraftmaschine mit zwei in einem Zylinderkopf angeordneten Einlaßkanälen pro Zylinder bekannt. In einem Luftansaugrohr des Einlaßkanalsystems ist eine Klappe vorgesehen, welche in Abhängigkeit vom Betriebszustand der Brennkraftmaschine einen der beiden Einlaßkanäle vollständig verschließt. Dieses System hat jedoch den Nachteil, daß die Ausbildung der zylinderkopfseitigen Einlaßkanäle, insbesondere die Ausbildung von deren Trennwand, mit geringen Toleranzen an die Klappe angepaßt sein muß und gleichzeitig die Klappenanordnung mit geringen Toleranzen gefertigt sein muß, damit ein entsprechend vollständiges Schließen eines der beiden Einlaßkanäle erzielt wird. Ferner kann mit diesem System lediglich ein Kanal vollständig zu- oder abgeschaltet werden. Eine Beeinflussung der Luftströmung in einem Kanal ist nicht möglich. Ferner kommt es bedingt durch Fertigungstoleranzen zu dem unerwünschten Zustand, daß nur ein Teil der Klappen, ungünstigstenfalls nur eine Klappe, einen Einlaßkanal vollständig verschließt, während die übrigen Klappen noch einen Spalt offen lassen.

Die DE 35 22 991 A1 beschreibt eine Brennkraftmaschine mit einem Einlaßkanal, wobei in einem rechteckförmigen Abschnitt des Einlaßkanals eine Drallklappe vorgesehen ist, welche in bestimmten Betriebssituationen, außer Vollast, derart ausgeklappt ist, daß sie eine Drallströmung in einen Motorzylinder erzeugt. Diese Anordnung ist jedoch aufwendig, da jede Drallklappe einzeln angesteuert werden muß. In einer erwähnten Alternative drückt der Luftstrom selbst die Klappe mehr oder weniger nieder. Dies hat jedoch den erheblichen Nachteil, daß der Luftstrom Arbeit leisten muß, wodurch Energie für die Luftströmung selbst verloren geht.

Der vorliegenden Erfindung liegt daher die Aufgabe zugrunde, ein Luftansaugsystem der obengenannten Art zur Verfügung zu stellen, wobei die obengenannten Nachteile überwunden werden und mittels Abschalten eines Teiles eines Ansaugkanals eine Ladungsbewegung in einem Brennraum der Brennkraftmaschine beeinflußbar ist.

Diese Aufgabe wird erfindungsgemäß durch ein Luftansaugsystem der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß im Einlaßkanal eine Trennwand angeordnet ist, welches den Einlaßkanal über einen vorbestimmten Abschnitt zwischen dem Zylinderkopfflansch und der Einlaßöffnung teilt, und daß die Schaltklappe derart ausgebildet und über den Zylinderkopfflansch hinausragend angeordnet ist, daß sie in den Querschnitt des Luftkanals verengender Stellung an der Trennwand anschlägt.

Dies hat den Vorteil, daß statt der vollständigen Abschaltung eines Einlaßkanals der Luftkanal und zusätzlich der zugeordnete Einlaßkanal unter Einbeziehung des Tumble-Bleches in ihrem Querschnitt verengt werden, so daß bei konstanter Anzahl aktiver Einlaßkanäle eine Ladungsbewegung in einen Brennraum der Brennkraftmaschine in gewünschter Weise beeinflußbar ist.

Eine gemeinsame Betätigung aller Schaltklappen erzielt man dadurch, daß in einer Wandung des Saugrohres eine Schaltklappenwelle vorgesehen ist, mit der die Schaltklappen aller Zylinder verbunden, insbesondere verschweißt, sind.

Ein bzgl. Fertigung und Montage einfaches und kostengünstiges Kraftstoffeinspritzsystem erzielt man dadurch, daß für jeden Zylinder eine Kraftstoffeinspritzvorrichtung vorgesehen ist, wobei in dem Saugrohr jeweilige Aufnahmen zur wenigstens teilweisen Aufnahme einer jeweiligen Kraftstoffeinspritzvorrichtung sowie ein Kraftstoffkanal ausgebildet ist, welcher mit allen Aufnahmen für die Kraftstoffeinspritzvorrichtungen in Verbindung steht.

Dadurch, daß jede Schaltklappe als Federblech ausgebildet ist, federn diese nach Anschlag an die Trennwand nach, bis alle Schaltklappen an der jeweiligen Trennwand anschlagen, so daß unabhängig von Winkeltoleranzen bzgl. mehrere Schaltklappen verschiedener Zylinder immer alle Schaltklappen einen Teil des Einlaßkanals weitestgehend dicht verschließen.

Störungen der Luftströmung in Luftkanal und Einlaßkanal durch die Schaltklappe sind dadurch vermieden, daß in einer Wandung des Luftkanals und/oder in einer Wandung des Einlaßkanals eine Ausnehmung derart ausgebildet ist, daß diese Ausnehmung die Schaltklappe wenigstens teilweise aufnimmt, wenn sich die Schaltklappe in einem den Luftkanal und Einlaßkanal vollständig freigebenden Zustand befindet.

Eine gute Abdichtung auf einer Seite der Trennwand in großen Toleranzbereichen erzielt man dadurch, daß die Schaltklappe an ihrem freien, an der Trennwand anschlagenden Ende um einen vorbestimmten Winkel abgekröpft ist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine Prinzipdarstellung eines erfindungsgemäßen Luftansaugsystems in Schnittansicht,
- Fig. 2: eine bevorzugte Ausführungsform eines erfindungsgemäßen Luftansaugsystems in Schnittansicht,
- Fig. 3: ein Saugrohrunterteil eines erfindungsgemäßen Ansaugsystems in Unteransicht,
- Fig. 4: in einer Schnittansicht entlang Linie H-H von Fig. 3,
- Fig. 5: in einer Schnittansicht Entlang Linie D-D von Fig. 3 und
- Fig. 6: in einer Schnittansicht Entlang Linie K-K von Fig. 4.

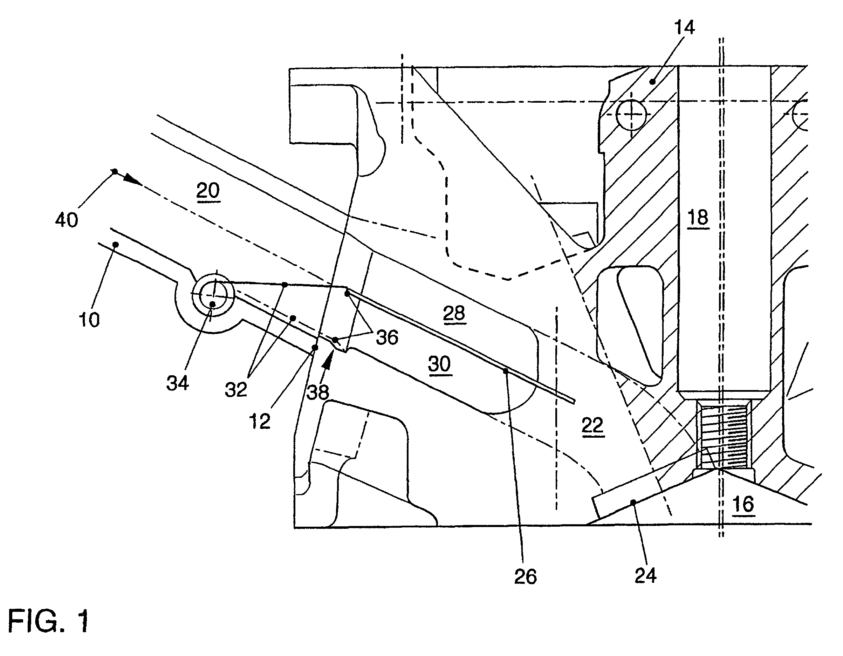

Wie aus der schematischen Darstellung gemäß Fig. 1 ersichtlich, umfaßt ein erfindungsgemäßes Luftansaugsystem ein Saugrohr bzw. Saugrohrunterteil 10, welches über einen Zylinderkopfflansch 12 an einem Zylinderkopf 14 angeflanscht ist. Der Zylinderkopf 14 begrenzt einen Brennraum 16 eines nicht dargestellten Zylinders und weist eine Aufnahme 18 für eine nicht dargestellte Zündkerze auf. Das Saugrohrunterteil 10 bildet einen Luftkanal 20 aus, welcher mit einem Einlaßkanal 22 im Zylinderkopf 14 in fluidleitender Verbindung steht. Der Einlaßkanal 22 mündet in eine Einlaßöffnung 24 zum Brennraum 16 des zugeordneten Zylinders. Im Einlaßkanal 22 des Zylinderkopfes 14 ist eine Trennwand 26 angeordnet, welche den Einlaßkanal 22 über eine vorbestimmte Strecke zwischen Zylinderkopfflansch 12 und der Einlaßöffnung 24 in zwei Kanäle 28 und 30 trennt.

In dem Saugrohrunterteil 10 ist eine Schaltklappe 32 auf einer Schaltklappenwelle 34 derart drehbar angeordnet, daß die Schaltklappe wahlweise in einen offenen Zustand, wie mit gestrichelten Linien angedeutet, oder in einen geschlossenen Zustand, wie mit durchgezogenen Linien dargestellt, schwenkbar ist. Im offenen Zustand ist ein Querschnitt des Luftkanals 20 und des Einlaßkanals 22 vollständig freigegeben, so daß beispielsweise bei Vollast einer dem Luftansaugsystem zugeordneten Brennkraftmaschine eine maximale Beladung des bzw. der Zylinder sichergestellt ist. In Teillast oder Leerlauf der Brennkraftmaschine dagegen befindet sich die Schaltklappe 32 in geschlossener Stellung, in der sie mit einem freien Ende 36 an der Trennwand 26 anschlägt und dadurch den Teilkanal 30 verschließt. Dadurch ist der wirksame Querschnitt des Luftkanals 20 und damit auch des Einlaßkanals 22 derart verengt, daß es an der Einlaßöffnung zu einer vorbestimmten Strömung kommt, welche auch im Teillastbetrieb oder im Leerlauf der Brennkraftmaschine für eine ausreichende Ladungsbewegung im Zylinders sorgt.

Die Schaltklappe 32 ragt über den Zylinderkopfflansch 12 hinaus in den Einlaßkanal 22 hinein und das frei Ende 36 der Schaltklappe ist leicht abgeknickt. Dadurch ist es möglich, daß die Schaltklappe unter dem Drehmoment der Schaltklappenwelle 34 federnd nachgibt, bis alle mit der Schaltklappenwelle 34 verbundenen Schaltklappen 32 verschiedener Zylinder an der Trennwand anschlagen. Auf diese Weise ist die erfindungsgemäße Konstruktion unempfindlich gegen Fertigungstoleranzen bzgl. unterschiedlicher Winkelstellungen verschiedener Schaltklappen 32 auf der Schaltklappenwelle 34. Mit anderen Worten schließen in geschlossener Stellung alle Schaltklappen 32 einer Schaltklappenwelle 34 an der Trennwand 26 einen Teil des Querschnittes des Luftkanals 20 bzw. des Einlaßkanals 22 dicht ab, da sich die Schaltklappenwelle 34 so lange dreht, bis die letzte Schaltklappe 32 an der Trennwand anschlägt.

Der Einlaßkanal 22 ist in einem Anlagebereich der Schaltklappe 32 im offenen Zustand mit einer Ausnehmung 38 versehen, in die das abgeknickte Ende 36 eingreift. Auf diese Weise ist eine minimale Beeinträchtigung einer Luftströmung 40 im Einlaßkanal 22 gegeben. Auch die Schaltklappenwelle 34 ist in eine Wandung des Saugrohrunterteils 10 wenigstens teilweise versenkt, so daß auch diese die Luftströmung 40 im Einlaßkanal 22 nur minimal beeinflußt.

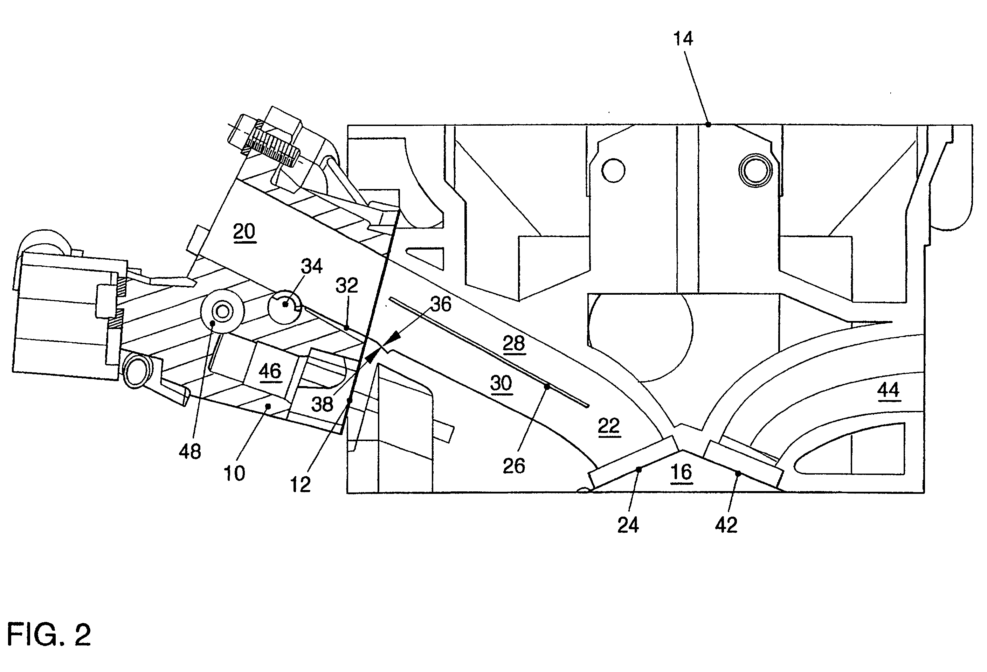

Die Fig. 2 zeigt eine bevorzugte Ausführungsform eines erfindungsgemäß ausgebildeten Luftansaugsystems, wobei gleiche Teile mit gleichen Bezugsziffern bezeichnet sind, so daß zu deren Erläuterung auf die voranstehende Beschreibung der Fig. 1 verwiesen wird. In Fig. 2 erkennt man zusätzlich eine Auslaßöffnung 42 mit Auslaßkanal 44 für heiße Abgase und eine Aufnahme 46 für eine nicht dargestellte Kraftstoffeinspritzventil. Für jeden Zylinder ist eine eigene Kraftstoffeinspritzventil vorgesehen und in dem Saugrohrunterteil 10 ist eine für alle Kraftstoffeinspritzventile gemeinsamer Kraftstoffkanal 48 ausgebildet, welcher in fluidleitender Verbindung mit allen Aufnahmen für die Kraftstoffeinspritzventil steht. Das Saugrohrunterteil 10 vereint somit die Vorrichtungen zur Luftansaugung und Kraftstoffeinspritzung in einem Bauteil.

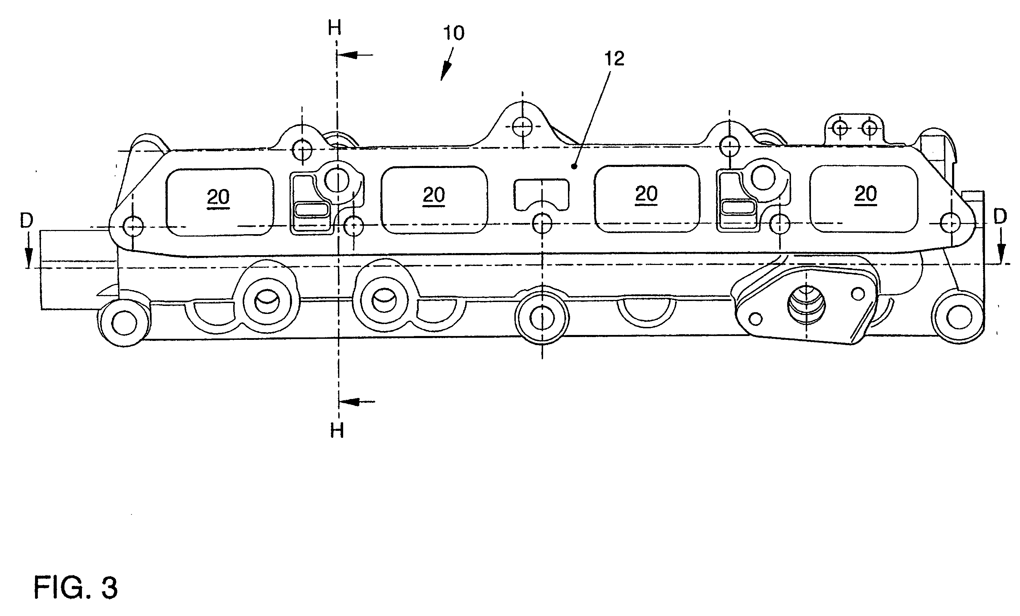

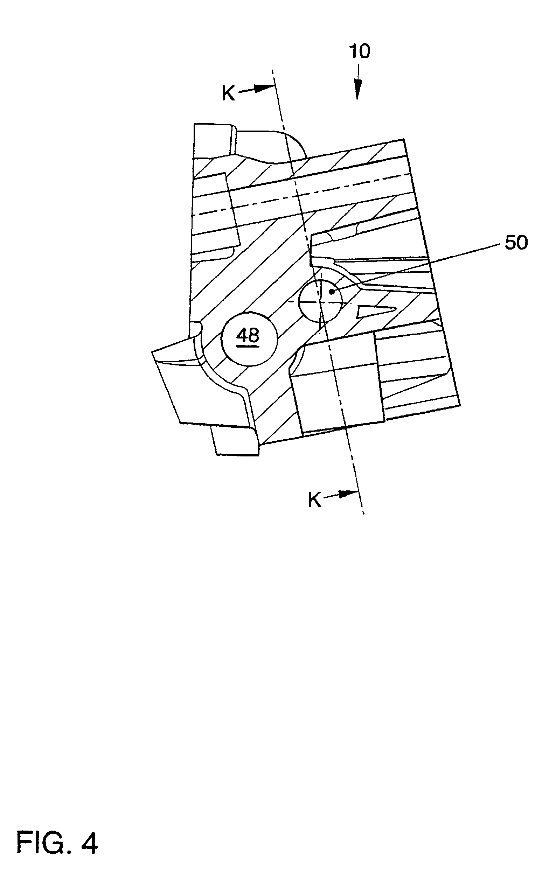

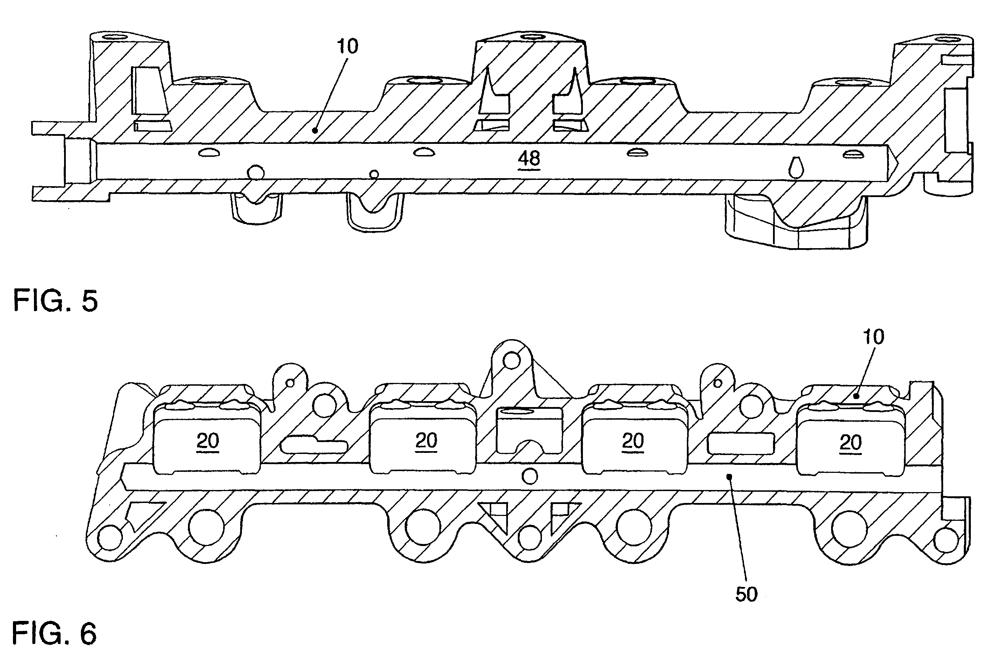

Wie bereits voranstehend erwähnt, ist in jedem Luftkanal 20 bzw. jedem Einlaßkanal 22 eines jeden Zylinders einer ansonsten nicht dargestellten Brennkraftmaschine eine Schaltklappe 32 vorgesehen, welche alle gemeinsam mit der Schaltklappenwelle 34 verbunden sind. Fig. 3 bis 6 zeigen in verschiedenen Ansichten eine bevorzugte Ausführungsform eines Saugrohrunterteils 10 für vier Zylinder, d.h. es sind der Zylinderzahl entsprechend vier Luftkanäle 20 vorgesehen. Aus Fig. 3 ist der Flansch 12 ersichtlich, mit dem das Saugrohrunterteil 10 mit dem Zylinderkopf 14 verbunden wird. Aus Fig. 4 bis 6 geht eine Öffnung 50 für die Schaltklappenwelle 34 und der Kraftstoffkanal 48 hervor.

## Patentansprüche

1. Luftansaugsystem für eine Brennkraftmaschine, insbesondere für einen Otto-Motor mit Direkteinspritzung, mit einem wenigstens einen Zylinder begrenzenden Zylinderkopf (14), einem Saugrohr (10), welches wenigstens einen Luftkanal (20) pro Zylinder aufweist, und pro Zylinder wenigstens einem in dem Zylinderkopf (14) angeordneten Einlaßkanal (22) mit in einen zugeordneten Zylinder mündender Einlaßöffnung (24), wobei das Saugrohr (10) und der Zylinderkopf (14) über einen Zylinderkopfflansch (12) derart miteinander verbunden sind, daß jeweils ein Luftkanal (20) des Saugrohres (10) mit einem entsprechenden Einlaßkanal (22) im Zylinderkopf (14) in fluidleitender Verbindung steht, wobei im Luftkanal (20) des Saugrohres (10) eine wahlweise den Querschnitt des Luftkanals (20) verengende Schaltklappe (32) angeordnet ist, **dadurch gekennzeichnet, daß** im Einlaßkanal (22) eine Trennwand (26) angeordnet ist, welches den Einlaßkanal (22) über einen vorbestimmten Abschnitt zwischen dem Zylinderkopfflansch (12) und der Einlaßöffnung (24) teilt, und daß die Schaltklappe (32) derart ausgebildet und über den Zylinderkopfflansch (12) hinausragend angeordnet ist, daß sie in den Querschnitt des Luftkanals (20) verengender Stellung an der Trennwand (26) anschlägt.

2. Luftansaugsystem nach Anspruch 1, **dadurch gekennzeichnet, daß** in einer Wandung des Saugrohres (10) eine Schaltklappenwelle (34) vorgesehen ist, mit der die Schaltklappen (32) aller Zylinder verbunden, insbesondere verschweißt, sind.

3. Luftansaugsystem nach einem der vorhergehenden Ansprüche, **dadurch gekennzeichnet, daß** für jeden Zylinder eine Kraftstoffeinspritzvorrichtung vorgesehen ist, wobei in dem Saugrohr (10) jeweilige Aufnahmen (46) zur wenigstens teilweisen Aufnahme einer jeweiligen Kraftstoffeinspritzvorrichtung sowie ein Kraftstoffkanal (48) ausgebildet ist, welcher mit allen Aufnahmen (46) für die Kraftstoffeinspritzvorrichtungen in Verbindung steht.

4. Luftansaugsystem nach einem der vorhergehenden Ansprüche, **dadurch gekennzeichnet, daß** jede Schaltklappe (32) als Federblech ausgebildet ist.

5. Luftansaugsystem nach einem der vorhergehenden Ansprüche, **dadurch gekennzeichnet, daß** in einer Wandung des Luftkanals (20) und/oder in einer Wandung des Einlaßkanals (22) eine Ausnehmung (38) derart ausgebildet ist, daß diese Ausnehmung (38) die Schaltklappe (32) wenigstens teilweise aufnimmt, wenn sich diese in einem den Luftkanal (20) und Einlaßkanal (22) vollständig freigebenden Zustand befindet.

6. Luftansaugsystem nach einem der vorhergehenden Ansprüche, **dadurch gekennzeichnet, daß** die Schaltklappe (32) an ihrem freien, an der Trennwand (26) anschlagenden Ende (36) um einen vorbestimmten Winkel abgekröpft ist.

## Claims

1. Air intake system for an internal combustion engine, in particular for a direct-injection spark-ignition engine, with a cylinder head (14) delimiting at least one cylinder, a suction pipe (10), which has at least one air duct (20) for each cylinder, and, for each cylinder, at least one intake port (22), which is arranged in the cylinder head (14) and has an inlet orifice (24) which opens into an assigned cylinder, the suction pipe (10) and the cylinder head (14) being connected via a cylinder head flange (12) in such a way that an air duct (20) of the suction pipe (10) is respectively connected to a corresponding intake port (22) in the cylinder head (14) such that fluid is able to circulate, with a flap valve (32) which optionally narrows the cross section of the air duct (20) being arranged in the air duct (20) of the suction pipe (10), **characterized in that** a partition (26), which divides the intake port (22) over a predetermined section between the cylinder head flange (12) and the inlet orifice (24), is arranged in the intake port (22), and **in that** the flap valve (32) is arranged such that it projects over the cylinder head flange (12) and configured in such a way that it contacts the partition (26) in the position in which it narrows the cross section of the air duct (20).

2. Air intake system according to Claim 1, **characterized in that** a flap valve shaft (34), to which the flap valves (32) of all the cylinders are connected, in particular welded, is provided in a wall of the suction pipe (10).

3. Air intake system according to one of the preceding claims, **characterized in that** a fuel injection device is provided for each cylinder, the suction pipe (10) having formed in it respective receptacles (46) for at least partially receiving a respective fuel injection device and also a fuel port (48), which is in connection with all the receptacles (46) for the fuel injection devices.

4. Air intake system according to one of the preceding claims, **characterized in that** each flap valve (32) is configured as a spring plate.

5. Air intake system according to one of the preceding claims, **characterized in that** a recess (38) is formed in a wall of the air duct (20) and/or in a wall of the intake port (22) in such a way that this recess (38) at least partially receives the flap valve (32) when the latter is in a state in which it completely exposes the air duct (20) and intake port (22).

6. Air intake system according to one of the preceding claims, **characterized in that** the flap valve (32) is cranked by a predetermined angle at its free end (36), abutting the partition (26).

## Revendications

1. Système d'aspiration d'air pour moteur à combustion interne, en particulier pour un moteur à allumage par étincelle à injection directe, comprenant au moins une culasse de cylindre (14) limitant un cylindre, un tube d'aspiration (10) qui présente au moins un canal d'air (20) par cylindre, et par cylindre au moins un canal d'admission (22) disposé dans la culasse de cylindre (14) avec une ouverture d'admission (24) débouchant dans un cylindre associé, le tuyau d'aspiration (10) et la culasse de cylindre (14) étant raccordés l'un à l'autre par une bride (12) de la culasse de cylindre de telle sorte qu'à chaque fois un canal d'air (20) du tuyau d'aspiration (10) soit en relation de conduction fluidique avec un canal d'admission correspondant (22) dans la culasse du cylindre (14), dans le canal d'air (20) du tuyau d'aspiration (10) étant disposée une soupape de commutation (32) rétrécissant de façon sélective la section transversale du canal d'air (20), **caractérisé en ce que** dans le canal d'admission (22) est disposée une paroi de séparation (26), qui divise le canal d'admission (22) sur une section prédéterminée entre la bride (12) de la culasse de cylindre et l'ouverture d'admission (24), et **en ce que** la soupape de commutation (32) est réalisée de telle sorte et est disposée de manière saillante au-delà de la bride (12) de la culasse de cylindre, qu'elle vienne buter dans la section transversale du canal d'air (20) de position rétrécie sur la paroi de séparation (26).

2. Système d'aspiration d'air selon la revendication 1, **caractérisé en ce qu'**il est prévu dans une paroi du tuyau d'aspiration (10) une tige de soupape de commutation (34), avec laquelle les soupapes de commutation (32) de tous les cylindres sont connectées, en particulier par soudage.

3. Système d'aspiration d'air selon l'une quelconque des revendications précédentes, **caractérisé en ce que** pour chaque cylindre est prévu un dispositif d'injection de carburant, dans lequel sont réalisés, dans le tuyau d'aspiration (10), des logements respectifs (46) destinés à recevoir au moins partiellement un dispositif d'injection de carburant respectif ainsi qu'un canal de carburant (48), qui est en relation avec tous les logements (46) pour les dispositifs d'injection de carburant.

4. Système d'aspiration d'air selon l'une quelconque des revendications précédentes, **caractérisé en ce que** chaque soupape de commutation (32) est réalisée en tant que tôle élastique.

5. Système d'aspiration d'air selon l'une quelconque des revendications précédentes, **caractérisé en ce que** dans une paroi du canal d'air (20) et/ou dans une paroi du canal d'admission (22) est réalisé un évidement (38) de telle sorte que cet évidement (38) reçoive au moins partiellement la soupape de commutation (32), lorsque celle-ci se trouve dans un état libérant complètement le canal d'air (20) et le canal d'admission (22).

6. Système d'aspiration d'air selon l'une quelconque des revendications précédentes, **caractérisé en ce que** la soupape de commutation (32) est recourbée suivant un angle prédéterminé sur son extrémité libre (36) butant contre la paroi de séparation (26).
